# EUROPEAN PATENT SPECIFICATION

(11) **EP 1 078 183 B1**
(45) Date of publication and mention of the grant of the patent: **27.07.2005**
(21) Application number: 99911420.0
(22) Date of filing: 15.03.1999
(51) Int. Cl.: F16K 17/16

(54) **ENHANCED REVERSE BUCKLING RUPTURE DISC**
UMKEHRBERSTSCHEIBE
DISQUE DE RUPTURE AMELIORE A FLAMBAGE INVERSE

(43) Date of publication of application: 28.02.2001
(73) Proprietor: CONTINENTAL DISC CORPORATION, Liberty, MO 64068 (US)
(72) Inventor: MOZLEY, Robert, M., Raytown, MO 64133 (US); McCAMIS, J., Kyle, Liberty, MO 64068 (US); SHIVERS, James, M., Kansas City, MO 64117 (US)
(74) Representative: Weydert, Robert
(86) International application number: PCT/US1999/005705
(87) International publication number: WO 2000/055531

(56) References cited:
- EP-A- 0 395 318
- EP-A- 0 437 019
- EP-A- 0 698 758
- EP-A- 0 770 805
- US-A- 5 368 180

## Description

### FIELD OF THE INVENTION

The present invention relates generally to safety pressure relief devices and more particularly to reverse buckling rupture discs which are designed to reverse and rupture at low bursting pressures and are highly reliable.

### BACKGROUND OF THE INVENTION

Relief devices of the type commonly known as rupture discs have been utilized in industry for many years to provide a safety mechanism to relieve excess pressure from an overpressurized system or vessel in a reliable manner. The rupture disc is most frequently placed in a vent or a pressure vessel or the like so as to prevent flow of fluid through the vent until the disc ruptures. Through the years, numerous improvements have been made in the rupture disc concept in order to reduce the cost and improve the reliability of the disc.

A prior art rupture disc is disclosed in US-A-5,368,180 on which the two-part form of independent claim 1 is based.

A specific type of disc normally referred to as a reverse buckling rupture disc has also been utilized for a number of years and functions under the principle that a disc dome is formed in the disc which is positioned in the vent such that the disc dome points toward or faces the pressure side of the vent, *i*.*e*., the convex side of the disc dome faces the internal region or upstream side of the vent where pressurized fluid is likely to produce an overpressure that would be dangerous or destructive if not relieved. One advantage of reverse buckling type discs is that systems being protected by the discs can be operated at pressures relatively close to the bursting pressure of the disc without producing fatigue and failure which occurs in many forward acting bursting discs when operated for long periods of time near the rated bursting pressure of such devices. When fluid pressure reaches a preselected pressure for which the disc dome was designed to rupture, the disc dome starts to collapse, *i*.*e*., the column or arch of the disc dome on one side thereof starts to buckle. It is believed that as the arch on one side of the disc dome starts to collapse, a buckling-type wave typically propagates across the surface of the disc dome to the opposite side of the disc dome where total collapse eventually occurs. This buckling wave tends to create a whiplash effect on the opposite side of the disc dome so that the disc dome at this location is rather violently urged in the direction to which the concave region of the disc dome faces (*i*.*e*., the downstream side of the vent).

Another disadvantage of some conventional reverse rupture buckling devices is that they are incapable of reversing and rupturing at low bursting pressures. Bursting pressures are generally defined relative to the size of the disc. For example, 103.5 kPa (15 psig) would be a low bursting pressure for a 50.8mm (2 inch) diameter disc made of stainless steel. Conventional limitations to achieving low bursting pressures have been twofold (1) causing the rupture disc dome to reverse at a low pressure, and (2) being able to open the rupture disc at the lower reversal pressures. As previously mentioned, some damaged, conventional reverse buckling rupture discs may reverse at a low pressure but not rupture at that pressure. Also, it is more difficult to rupture conventional reverse buckling rupture discs at low pressures where the media is noncompressible (*e*.*g*., a liquid). This is because a noncompressible media such as a liquid does not impart the same dynamic energy to the dome during collapsing as a compressible media does.

### SUMMARY OF THE INVENTION

The present invention is directed to an improved reverse buckling rupture disc that eliminates or at least minimizes the above-mentioned drawbacks of such prior art devices The reverse buckling rupture disc according to the present invention as defined in the independent claim 1 includes a disc-shaped flat flange region, a concave-convex reversible disc dome and a transition region that joins the flat flange region to the disc dome region. The concave-convex reversible disc dome region has a thickness and a configuration such that the disc dome reverses when a predetermined fluid pressure is exerted on the convex side and ruptures upon reversal. The disc has one or more deformations formed at or near the apex of the disc dome. The one or more deformations are provided to weaken the disc dome and thereby cause the disc to buckle or reverse at a lower pressure than a disc of similar thickness, diameter, crown height and material type not having the one or more deformations. This makes the disc suitable for low pressure applications.

In one advantageous embodiment at the reverse rupture disc includes at least one irregular transition region adjacent to the transition region and coplanar with the annular flat flange region of the disc. The disc further may include a groove which is formed along a substantial portion of the transition region of the disc. The irregular transition region of the disc dome facilitates rupturing of the disc along the groove. Preferably, the groove extends around an arc of approximately 330°, but may vary as desired. Similarly, the length or region without groove may vary as required in order to retain petal after burst. The ungrooved region of the disc forms a hinge about which the reversed and ruptured disc dome remains attached to the flat flange region of the disc after rupturing. This design prevents fragmentation of the disc dome. In a preferred embodiment of the reverse rupture disc, the ungrooved portion of the disc is disposed a preselected distance from the irregular transition region.

In another advantageous embodiment of the reverse rupture disc, a shear enhancing means aids in the rupturing of the reversed disc. The shear enhancing means cooperates with the groove to facilitate rupturing of the disc along the groove upon the reverse buckling thereof. The shear enhancing means is preferably located to cooperate with the transition region, and more specifically with an irregular transition region. The shear enhancing means may consist of a protrusion or a notch which cooperates with the irregular transition. A shear enhancing means in the shape of a notch may provide better localized stress than a protrusion given the absence of support at only one location provided by a notch compared to the existence of support at only one location provided by a protrusion. The notch focuses localized stress on the groove at the corners of the notch, allowing the rupture disc dome to flex away from the pressure at the notch. More specifically, circular, triangular, rectangular, are among an infinite number of shapes of various sizes which can be employed to further control the pressure at which the disc fractures along the groove. The shear enhancing means may be a part of (e.g., affixed to) the reverse rupturing disc, although preferably the shear enhancing means is part of a support ring, or the rupture disc holder. The support ring further includes an arcuate projection which is located adjacent to the ungrooved region of the disc. The arcuate projection provides a support surface for the disc dome region of the disc after rupturing. Alternatively, the arcuate projection may be a part of a rupture disc ring or holder.

In a further advantageous embodiment of the reverse rupture disc, a back pressure support means protects the reverse rupture disc from damage or destruction potentially caused by induced vacuum or back pressure. The above enhancements alone, and in combination with annealing the rupture disc after forming and scoring the disc material, have enabled the design and manufacture of very low pressure reverse buckling rupture discs. However, such low pressure discs require support in the reverse direction to protect against back pressures caused, for example, by vacuum or forward to reverse pressure cyclical conditions. A back pressure support means provides additional support in the convex direction of the transition region of the disc, including support for any irregular transition region. The back pressure support means may also extend over a portion of the concave-convex disc dome, as required for functional or manufacturing purposes. The back pressure support means may be a part of the reverse rupture disc, a support ring, or the disc holder.

### BRIEF DESCRIPTION OF THE DRAWINGS

Figure 1 is a perspective view of a reverse rupture disc according to the present invention.
Figure 2 is a perspective view of another embodiment of the reverse rupture disc according to the present invention.
Figure 3a is a perspective view of a reverse rupture disc assembly according to the present invention.
Figure 3b is an exploded view of one embodiment of a reverse rupture disc provided with shear enhancing means and back pressure support means.
Figure 3c is an exploded view of one embodiment of a reverse rupture disc provided with shear enhancing means and back pressure support means extending over a portion of the concave-convex disc dome region.
Figure 3d is a cross-sectional view of back pressure support means extending over a portion of the concave-convex disc dome region.
Figure 4 is a top view of the reverse rupture disc shown in Figure 1.
Figure 5 is a cross-sectional view of the reverse rupture disc according to the present invention in an installed position.
Figure 6 illustrates the reverse rupture disc according to the present invention after rupturing.
Figure 7 is a perspective view of a planar material to be formed into a reverse buckling rupture disc according to the present invention.
Figure 8 is a cross-sectional view of an apparatus used in forming the disc dome, deformation and irregular transition region of the reverse rupture disc according to the present invention.
Figure 9 is an exploded cross-sectional view of a grooving apparatus having a knife blade for placing a circumferential groove in the transition region of the disc.
Figure 10 is an enlarged fragmentary cross-sectional view of the apparatus and disc of Figure 9 showing the disc during the actual process step of forming a groove in the transition region.
Figure 11 is an exploded perspective view of the rupture disc and die from the grooving apparatus shown in Figure 9 following the formation of a groove in the disc in the transition region.
Figure 12 is a perspective view of a rupture disc holder in accordance with the invention.

### DETAILED DESCRIPTION OF THE INVENTION

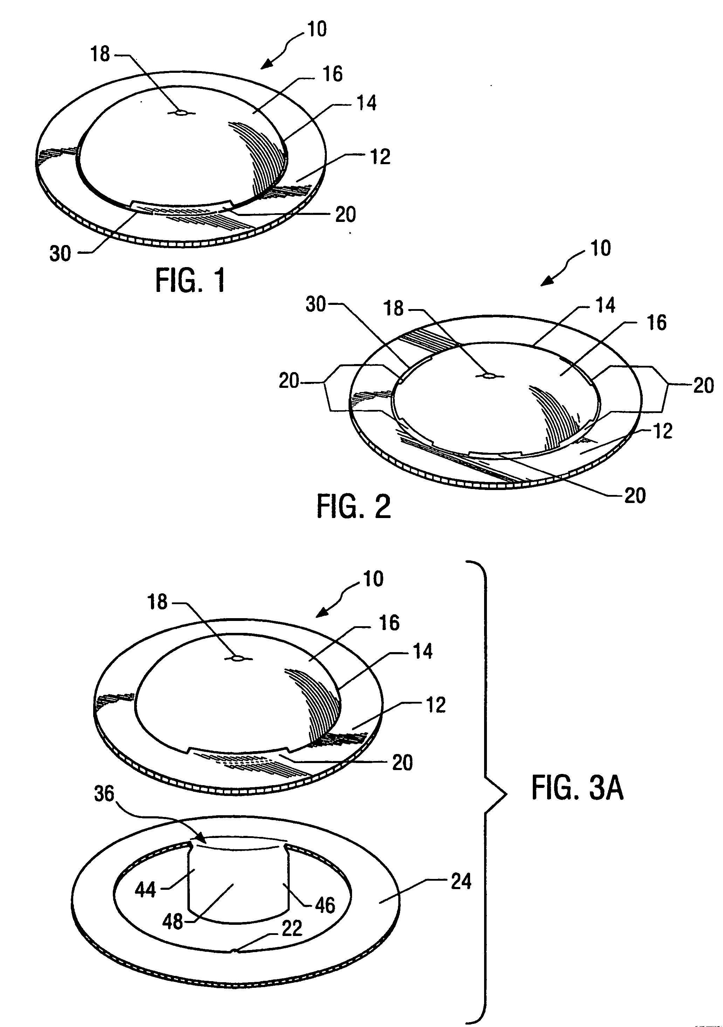

Turning now to the drawings and referring initially to Figure 1, reference numeral **10** generally designates a reverse rupture disc according to the present invention. The disc **10** is defined by an annular flat flange region **12,** a transition region **14,** and a disc dome **16,** as is well understood by those skilled in the art. The reverse rupture disc **10** is formed of a metal material which may be made up of a number of compositions, including, for example, nickel, aluminum, gold, tantalum, and composite materials such as MONEL®, INCONEL®, or HASTELLOY C®. Alternatively, the reverse rupture disc may be formed from other suitable materials. In the presently preferred embodiment illustrated in Figure 1, the disc dome region **16** of the rupture disc **10** has a deformation **18** formed at its geometric apex. Deformation as defined in this application refers to a weakening of the strength of the disc dome; one type of deformation may be a dimple. The deformation **18** is located in the rupture disc **10** and may have an irregular shape in the dome. The deformation **18** weakens the integrity of the disc dome **16** so that when pressure is applied to the disc **10,** it will buckle at a pressure which is lower than the rated pressure for the disc absent the deformation **18.** For example, assuming the rated burst pressure for the disc, absent any dimple, indentations, dents, or other damage, is 828 kPa (120 psi). The formation of the deformation **18** weakens the disc **10** so that it is likely to buckle at between approximately 40 to 80 percent of its rating pressure without the deformation (*e*.*g*., between approximately 331.2 to 662.4 kPa (48 to 96 psi)). The depth of the deformation **18,** material thickness, and crown height may also be used to adjust or set the rated burst pressure of the disc **10**.

The theory behind placing the deformation **18** at the apex of the disc dome **16** is that it weakens the disc **10** at its most vulnerable location, so that the disc is less likely to buckle below its rated pressure, even if damaged. The reason that the apex of the disc dome **16** is believed to be the weakest point is because it is the thinnest region of the disc dome and it is at the geometric point on the disc dome which receives no vertical support from the disc dome column or arch. Tests have shown that incidental damage to the disc **10** in locations other than the apex does not cause the disc to buckle at a pressure lower than that required to make the disc **10** buckle with the deformation **18** formed at its apex. This design thus helps establish a minimum reliable pressure at which the reverse rupture disc **10** will buckle. With the deformation **18** being placed on the apex of the disc dome **16,** the disc **10** begins to buckle at the rated pressure at the location of the deformation 18. Thus, the buckling initiates at the center of the disc dome **16** and propagates outward in a radial direction toward the transition region **14.**

In the preferred embodiment of the present invention, the annular flat flange region **12** connects to the dome **16** at an irregular transition region extending into the periphery of the dome as shown in Figure 1. The flat flange region **12** is located in the disc and may include an arch or cord extending in the same plane extending radially inward past the groove (as discussed further below) causing the dome to have an irregular inner diameter. This irregular transition region is indicated by the reference numeral **20** and is coplanar with the annular flat flange region **12** of the reverse rupture disc **10.** The disc dome **16** may be formed with one or more irregular transition regions **20** around the circumference of the base region of the disc dome **16.** Figure 1 illustrates one irregular transition region **20.** Figure 2 illustrates an alternate embodiment where multiple irregular transition regions **20** are disposed around the perimeter of the base region of the disc dome **16.**

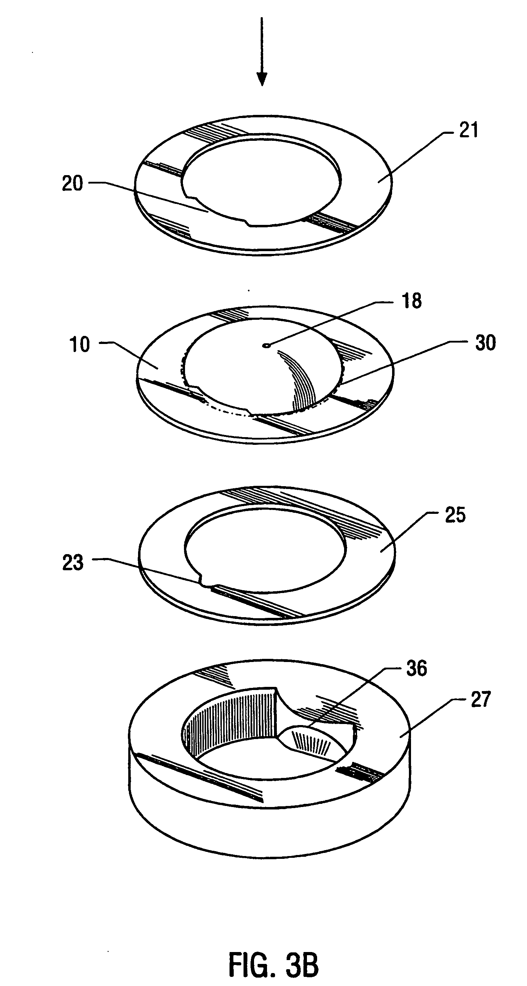

Returning to the embodiment illustrated in Figure 1, the transition region **14,** and more particularly the irregular transition region **20** of the disc dome **16,** cooperates with a shear enhancing means such as a protrusion **22** formed in support ring **24** (shown in Figure 3a) or a notch **23** formed in outlet ring **25** (shown in Figure 3b) to facilitate rupturing the disc **10.** Alternatively, the shear enhancing means could be part of the disc **10,** any support ring, or a rupture disc holder **27.** A shear enhancing means in the shape of a notch will provide better localized stress than a protrusion given the absence of support at one point rather than the existence of support at one point. A circular shape has been used successfully, but many shapes for the notch can be employed to channel sufficient stress to the irregular transition region **20** to meet design criteria. One skilled in the art will appreciate that single or multiple shear enhancing means with any number of shapes and locations may be employed with the multiple irregular transition regions **20** of Figure 2.

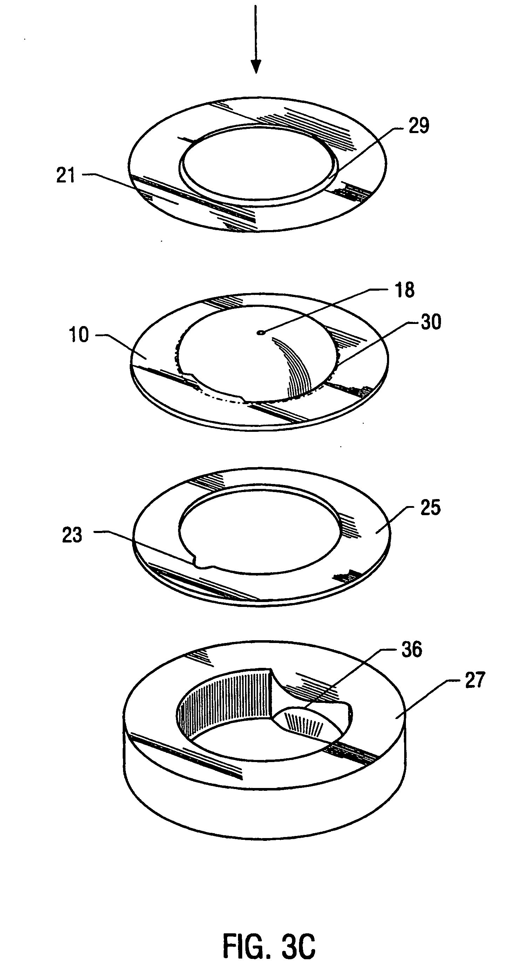

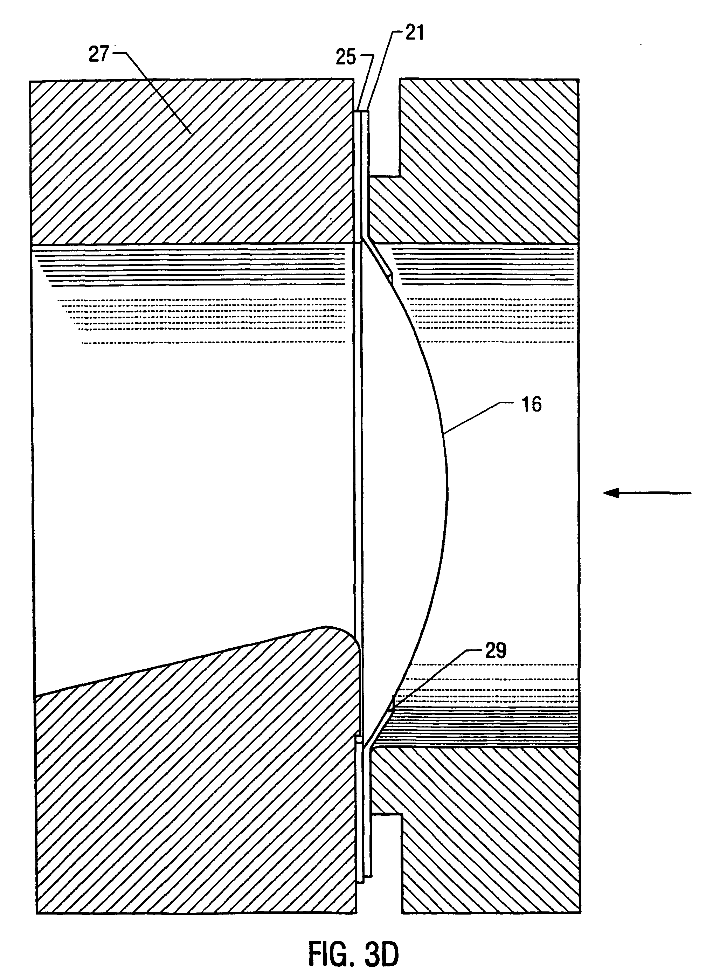

Discs designed to rupture at low pressures give rise to another aspect of the present invention, a back pressure support means which protects the reverse rupture disc **10** from damage or destruction potentially caused by induced back pressure. As illustrated in Figure 3b, the back pressure support means may take the same dimensions as the transition region **14,** including the irregular transition region **20** as required for support. Alternatively, the support means may extend to a portion of the disc dome **16** in the form of a flange **29,** as shown in Figures 3c and 3d. The back pressure support means may be a part of the disc **10,** any support ring such as an inlet ring **21,** or disc holder **27.** One skilled in the art will appreciate that back pressure support means with any number of shapes and locations may be employed to protect the disc **10.** The embodiment illustrated in Figure 3b shows a disc dome having a deformation **18;** however, it is understood that the back pressure support means functions independently of the deformation and may be used with a standard disc dome.

With respect to back pressure support, the key area of the disc **10** in need of support is the scored, or grooved region **30,** to be discussed in greater detail below. The combination of employing disc grooving, deformation(s) at or near the apex of the dome, irregular transition region(s), shear enhancing means, and annealing the disc as the last step, has enabled production of very low burst pressure discs. Annealing the disc will relieve stresses incurred in the material during the forming and scoring processes, allowing the groove line to fracture more readily than without the annealing step. For example, such an annealed two inch disc, employing a notch as the shear enhancing means, will reverse and rupture at two psi. However, vacuum pressures of 103.5 kPa (15 psi) are not uncommon forces in the convex direction of reverse rupturing discs. Therefore, additional support in the convex direction is required for such low pressure discs.

Vacuum pressure on the rupture disc dome causes it to move very slightly in the convex direction, thus flexing and fracturing the groove **30.** This is due to the very thin rupture disc material thickness remaining after being scored. The groove cannot resist much vacuum pressure and resulting movement in the convex direction before fracture. To solve this problem, an inlet ring **21** having dimensions similar to the flat flange region **12,** including any irregular transition region **20,** would sufficiently support the scored region to prevent movement of the dome **16** in the convex direction, in turn preventing undesirable score fatigue and premature failure at the groove **30.** Since the rupture disc dome **16** has rigidity from being formed, it is not required for the inlet ring **21** to support the rupture disc dome in more than the area of the irregular transition region **20.** However, for manufacturing or design requirements, or in embodiments without an irregular transition region, the inlet ring **21** may extend over a portion of the disc dome **16** in the form of a flange **29,** as shown in Figure 3c. The inlet ring **21** will allow the rupture disc **10** to continue to perform satisfactorily after being exposed to full vacuum and cycling conditions of positive to vacuum pressure.

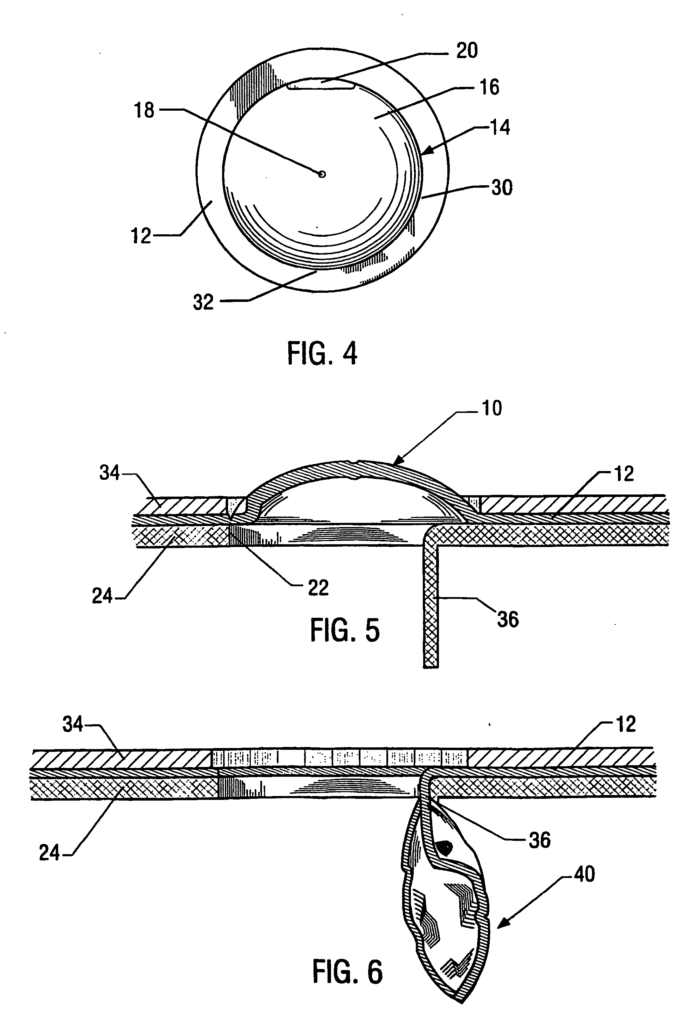

The rupture disc **10** further includes a partial groove **30,** which is formed in the transition region **14.** The partial circular groove **30** extends around a substantial portion of the perimeter of the disc dome **16** in an arc which is approximately 330°, as shown in Figure 4. The depth of the partial circular groove **30** is generally greater than 66 percent of the thickness of the disc **10** in the transition region **14.** The approximately 30° arcuate section where the partial circular groove **30** does not span is indicated generally by reference numeral **32.** One skilled in the art will appreciate that the size of the perimeter of the disc dome and the arcuate section may vary depending on design considerations. This region of the transition region **32** functions as a hinge or tab for the rupture disc **10** at the time of bursting. Upon bursting, the disc dome **16** tears away from the flange region **12** along the groove **30,** and remains intact or untom in the tab region **32.** This design enables the disc **10** to open and retain the disc dome **16,** much like the way opening of a push-tab soda cans allows a region of the tab to remain connected.

Figure 5 shows the disc **10** installed between two support rings, an upstream support ring **34** and a downstream support ring **24.** The upstream and downstream support rings **34, 24** hold the disc **10** in place between oppositely facing disc holders and vent pipe sections **4** and **5,** as shown in Figure 1 of U.S. Patent No. 4,669,626.

The upstream support ring **34** is disposed above the flat flange region **12** of the disc **10.** The inner edge of the upstream support ring **34** generally lies above the center of the partial circular groove **30.** The downstream support ring **24** is disposed below the flat flange region **12** of the disc **10.** The inner edge of the downstream support ring **24** generally lies below the center of the partial circular groove **30.** The inner edge of the downstream support ring **24** acts as a shearing edge for the groove **30.**

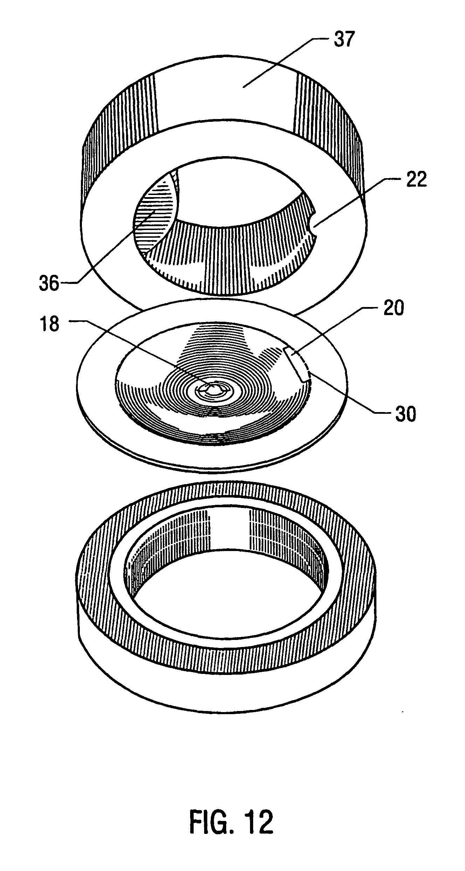

The downstream support ring **24** has a protrusion **22** and an arcuate projection **36,** best shown in Figure 3. It extends radially inward from the inner diameter and may vary in length or width. Alternatively, the downstream support ring **24** (e.g., outlet ring **25)** has a notch **23** as shown in Figure 3b. The protrusion **22,** or notch **23,** is located in the downstream support ring **24** or holder and may take the form of a spike, point of triangular shape, or other desirable shape. In an alternative embodiment, the protrusion **22,** or notch **23,** and the arcuate projection **36** are housed in a rupture disc holder **37** shown in Figure 12. In embodiments employing an irregular transition region as discussed above, the protrusion **22,** or notch **23,** cooperates with the irregular transition region **20** of the disc dome **16** to rupture the disc **10.** This occurs as follows. Once the overpressure reaches the rated pressure of the disc **10,** the disc begins to buckle and reverse. During reversal, a downward pressure is exerted on the disc **10** pushing the disc downstream. Meanwhile the protrusion **22** acts on the irregular transition region **20,** thus applying a localized, upwardly-directed counter force. Alternatively, the notch **23** would increase localized stress on the irregular transition region **20** by providing no counter force against the overpressure at one or more locations. The overpressure in combination with the oppositely directed forces due to the protrusion **22,** or the lack of counterforce due to the notch **23,** exert a stress on the partially circular groove **30,** which causes the disc **10** to initiate shearing along the groove **30.** Because the groove **30** is not formed in the tab region **32,** the disc **10** does not shear in that region. The tab region **32** thus acts as a hinge securing the ruptured disc **10** to the annular flat flange region **12.**

The arcuate projection **36** of the support ring **24** is downstream of, and preferably aligned with, the tab region **32** such that, when the rupture disc **10** bursts the disc dome **16** will pivot about the tab region **32** and engage the arcuate projection **36,** as shown in Figure 6. Figure 6 illustrates the ruptured and somewhat crumpled disc dome, as indicated by the reference numeral **40,** wrapped about the projection **36,** especially in the area of the groove **30** that tore from the flange region **12,** but which was adjacent to the hinge region **32.** The projection **36** is arcuate along its radially inward edge. The arcuate projection **36** has radially outward ends thereof **44** and 46 which include the arch **48** therebetween (shown in Figure 3) which is generally similar to but slightly larger than the arch encompassed by the tab region **32.**

The above-described design ensures that the disc **10** will not only reverse at the rated pressure (which is determined after the deformation **18** is formed therein), but also open at that pressure. The deformation **18** makes it less likely that any incidental damage to the disc **10** does not cause the disc to reverse at a pressure lower than the rated pressure. The groove **30** in combination with the irregular transition region **20** of the disc dome **16,** which cooperates with the protrusion **22,** or notch **23,** essentially ensures that the disc **10** opens at its rated pressure.

As discussed above, prior art discs, which have been incidentally damaged, may not both reverse and open at their rated pressure. They may reverse at a lower pressure but not open until a much higher pressure. The design of disc **10** described herein is intended to overcome these drawbacks. In addition, disc **10** can be designed to operate effectively as a reverse buckling rupture disc in a low pressure system. In this type of system, disc **10** would both reverse and rupture which is different from numerous prior art discs. Finally, the present invention does not require a knife assembly and which minimizes the likelihood of damage to the system. The disc **10** according to the present invention solves several of the problems of conventional discs.

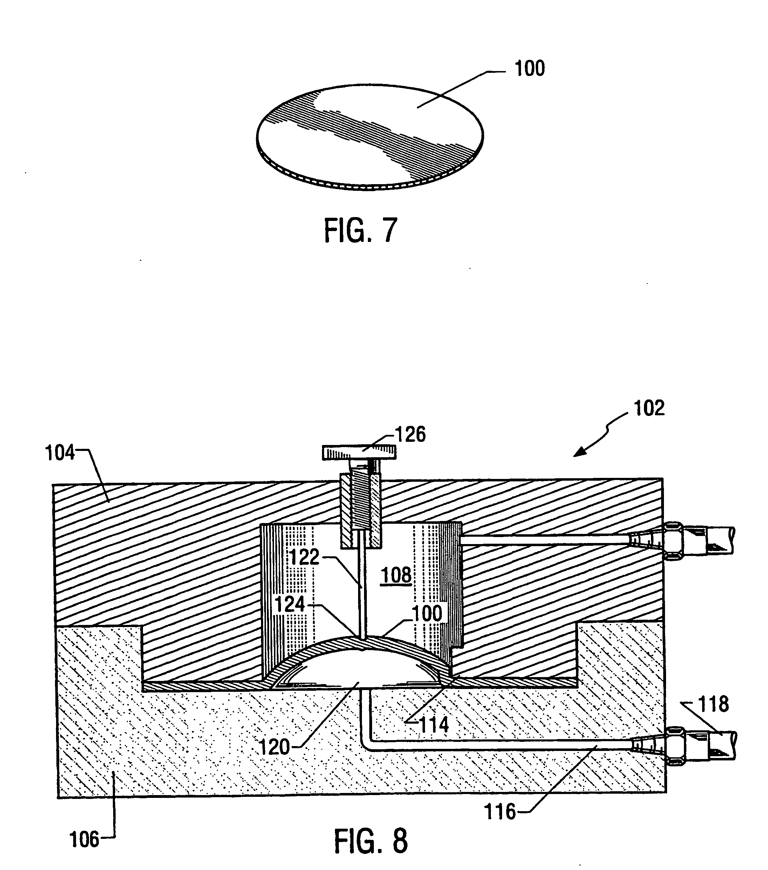

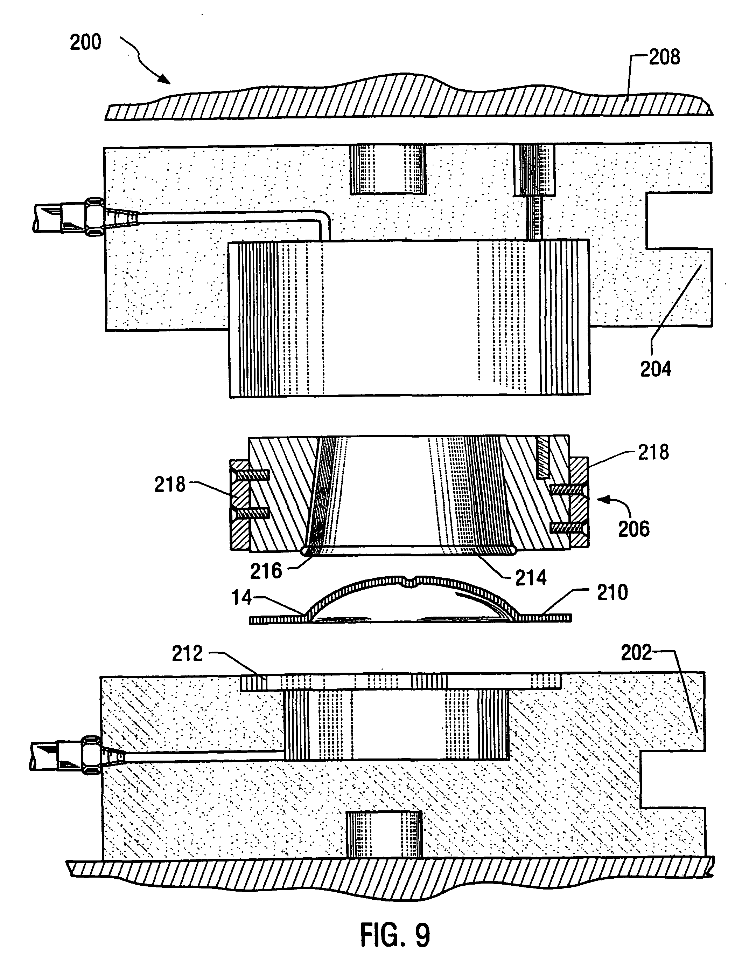

Figures 7-11 illustrate different steps in the method of manufacture of a reverse rupture disc **10** according to the present invention and illustrate various structures utilized in the manufacture of the present invention. Figure 7 illustrates a planar sheet of material (*e*.*g*., metal) **100** from which a reverse rupture disc, such as the previously described disc **10,** is manufactured. Figure 8 illustrates an apparatus **102** for forming a rupture disc **10** from such a material **100.** The apparatus **102** includes an upper member **104** and a lower member **106** which generally mate together so as to define a chamber **108** therebetween. A protrusion **114** which is part of the upper member **104** is provided to form the irregular transition region **20** in the base of the disc dome **16,** as explained above and shown in Figure 1.

A fluid supply passage **116** communicates a suitable source of pressurized fluid from a hose **118** to a lower region **120** of the chamber **108,** in which chamber region **120** is shown below the material **100.** As fluid is supplied to the chamber **108** at sufficient pressure, the material **100** bulges, forming the disc dome **16.** A rod **122** having a rounded end **124** protrudes into the chamber **108** from the upper member **104** of the apparatus **102.** The rod **122** forms the deformation **18** in the disc dome **16** as the material **100** bulges under pressure. The rod **122** can be adjusted axially using a micrometer **126** which in turn adjusts the size and depth of the deformation **18.** Also, by adjusting the pressure of the fluid to the passage **116,** the height of the disc dome **16,** also known as the crown height, can be adjusted.

A grooving apparatus **200** for performing the grooving process is shown in Figures 9, 10 and 11. The apparatus **200,** as shown in Figure 9, includes a lower holder member **202,** an upper holder member **204,** which mates with the lower holder member **202,** a die or knife holding member **206,** and force exerting means such as the partially shown hydraulic press mechanism **208.** A prebulged disc **210** is placed in a seat **212** in the lower holder member **202.** The knife holding member **206** includes a circular knife **214** having an edge **216** having a radius which is slightly larger than the rupture disc dome radius, but the same size as the radius of the groove **30** of Figure 1.

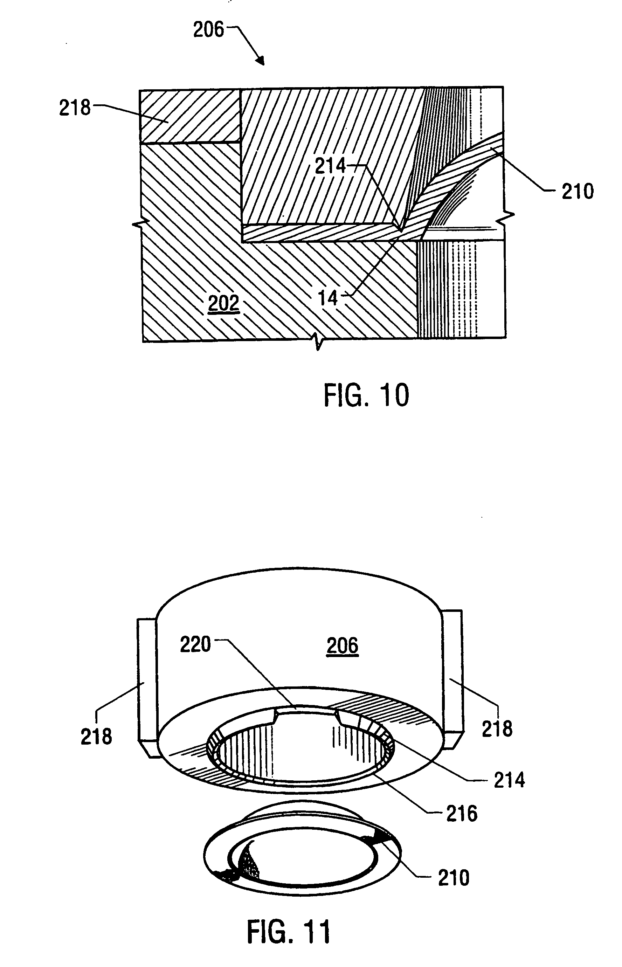

The knife edge **216** is placed in engagement with the disc transition region **14,** as shown in Figure 10, and force is applied by the press **208.** Stops **218** on the knife holding member **206,** shown in Figure 9, engage the holder **202** to facilitate proper grooving of the disc **10** so that the groove **30,** as seen in Figure **10,** has a proper depth associated therewith. The knife **214,** shown in Figure 11, is only partially circumferential and includes a sector **220** in which the knife **214** is omitted to leave a region of the disc transition region **14** ungrooved. The sector **220** occupies an arc of a preselected size (*e*.*g*., approximately 30°). The stops **218** are removed from the knife-holding member **206** to facilitate alternate use of the other stops specifically designed for other particular depths and/or other disc thicknesses. Alternatively, the knife **214** can be replaced by other types of knife members so as to the limit the depth of a groove in the region **220.** A final step after scoring may be to anneal the disc to allow the score line to fracture more readily.

While the present invention is susceptible to various modification in alternate forms, several of which have been discussed above, it should be understood that the invention is not intended to be limited to the particular forms disclosed. Rather, the invention is intended to cover all modifications, equivalents, and alternatives falling within the scope of the invention as defined by the appended claims.

## Claims

1. A reverse buckling rupture disc, comprising:
a) an annular flat flange region (12);
b) a disc dome region (16) having a thickness and configuration such that said disc dome region (16) reverses when a predetermined fluid pressure is exerted on the convex side thereof; and
c) a transition region (14) that joins the annular flat flange region (12) to the disc dome region (16);
**characterized by** at least one concave deformation (18) disposed at or near the apex of the disc dome.

2. The reverse buckling rupture disc of claim 1, further including an irregular transition region (20) having at least one flat section which is adjacent to the transition region (14) and coplanar with the annular flat flange region (12) of the disc.

3. The reverse buckling rupture disc of claim 1 or 2, wherein the disc is cooperable with a shear enhancing device (22,23).

4. The reverse buckling rupture disc of claim 2, further including a plurality of irregularly spaced transition regions (20).

5. The reverse buckling rupture disc of claim 1, wherein a groove (30) having an arc shape is formed along a portion of the transition region (14) of the disc.

6. The reverse buckling rupture disc of claim 5, wherein the depth of the groove (30) is at least 66 percent of the thickness of the disc in the transition region (14).

7. The reverse buckling rupture disc of claim 3, wherein the shear enhancing device includes a protrusion (22).

8. The reverse buckling rupture disc of claim 7, wherein the protrusion (22) is located to cooperate with the irregular transition region.

9. The reverse buckling rupture disc of claim 3, wherein the shear enhancing device defines a notch (23).

10. The reverse buckling rupture disc of claim 5, wherein the groove (30) defines an arc of approximately 330 degrees.

11. The reverse buckling rupture disc of claim 9, wherein the shear enhancing device defines a plurality of notches (23).

12. The reverse buckling rupture disc of claim 9, wherein the notch (23) is located to cooperate with the irregular transition region (20).

13. The reverse buckling rupture disc of claim 9, further including a plurality of irregular transition regions (20) and a plurality of notches (23).

14. The reverse buckling rupture disc of claim 9, wherein the notch (23) is circular.

15. The reverse buckling rupture disc of claim 3, wherein the shear enhancing device (22,23) includes an outlet ring (25).

16. The reverse buckling rupture disc of claim 3, wherein the reverse buckling rupture disc has upstream and downstream sides, and wherein the shear enhancing device (22,23) is located on the downstream side of the reverse buckling rupture disc.

17. The reverse buckling rupture disc of claim 3, wherein the shear enhancing device (22,23) includes a disc holder (27).

18. The reverse buckling rupture disc of claim 1, further comprising a back pressure support device (21,27) situated adjacent the disc dome region (16).

19. The reverse buckling rupture disc of claim 18, wherein the back pressure support device (21,27) is located on the convex side of the disk dome.

20. The reverse buckling rupture disc of claim 18, wherein the back pressure support device (21,27) defines a shape corresponding to the shape of the transition region.

21. The reverse buckling rupture disc of claim 18, wherein the back pressure support device (21,27) encircles a portion of the disc dome region (16).

22. The reverse buckling rupture disc of claim 18, wherein the back pressure support device (21,27) defines a flange (29) with an interior diameter smaller than the diameter defined by the groove (30).

23. The reverse buckling rupture disc of claim 18, wherein the back pressure support device comprises an inlet ring (21).

24. The reverse buckling rupture disc of claim 18, wherein the back pressure support device comprises a disc holder (27).

## Patentansprüche

1. Umkehrberstscheibe, mit:
(a) einem ringförmigen flachen Flanschbereich (12);
(b) einem gewölbten Scheibenbereich (16) der eine Dicke und eine Gestalt aufweist damit der gewölbte Scheibenbereich sich umkehrt wenn ein vorbestimmter Fluiddruck auf die konvexe Seite desselben ausgeübt wird; und
(c) einem Übergangsbereich (14), der den ringförmigen flachen Flanschbereich (12) mit dem gewölbten Scheibenbereich (16) verbindet;
**gekennzeichnet durch** mindestens eine konkave Verformung (18) an dem oder in der Nähe des Scheitels der Scheibenwölbung.

2. Umkehrberstscheibe nach Anspruch 1, des Weiteren mit einem unregelmässigen Übergangsbereich (20) mit mindestens einem flachen Abschnitt benachbart zu dem Übergangsbereich (14) und koplanar mit dem ringförmigen, flachen Flanschbereich (12) der Scheibe.

3. Umkehrberstscheibe nach Anspruch 1 oder 2, wobei die Scheibe mit einer Scherverstärkungseinrichtung (22, 23) zusammenwirkt.

4. Umkehrberstscheibe nach Anspruch 2, des Weiteren mit einer Vielzahl von unregelmässig voneinander beabstandeten Übergangsbereichen (20).

5. Umkehrberstscheibe nach Anspruch 1, wobei eine Nut (30) mit einer Bogenform längs einem Teil des Übergangsbereiches (14) der Scheibe geformt ist.

6. Umkehrberstscheibe nach Anspruch 5, wobei die Tiefe der Nut (30) mindestens 66% der Dicke der Scheibe in dem Übergangsbereich (14) beträgt.

7. Umkehrberstscheibe nach Anspruch 3, wobei die Scherverstärkungseinrichtung einen Vorsprung (22) aufweist.

8. Umkehrberstscheibe nach Anspruch 7, wobei der Vorsprung (22) angeordnet ist, um mit dem unregelmässigen Übergangsbereich zusammenzuwirken.

9. Umkehrberstscheibe nach Anspruch 3, wobei die Scherverstärkungseinrichtung durch eine Kerbe (23) gebildet ist.

10. Umkehrberstscheibe nach Anspruch 5, wobei die Nut (30) sich längs einer Bogenstrecke von etwa 330 Grad erstreckt.

11. Umkehrberstscheibe nach Anspruch 9, wobei die Scherverstärkungseinrichtung durch eine Vielzahl von Kerben (23) gebildet ist.

12. Umkehrberstscheibe nach Anspruch 9, wobei die Kerbe (23) sich in einer Lage befindet um mit dem unregelmässigen Übergangsbereich (20) zusammenzuwirken.

13. Umkehrberstscheibe nach Anspruch 9, des Weiteren mit einer Vielzahl von unregelmässigen Übergangsbereichen (20) und einer Vielzahl von Kerben (23).

14. Umkehrberstscheibe nach Anspruch 9, wobei die Kerbe (23) kreisförmig ist.

15. Umkehrberstscheibe nach Anspruch 3, wobei die Scherverstärkungseinrichtung (22, 23) einen Auslassring (25) aufweist.

16. Umkehrberstscheibe nach Anspruch 3, wobei die Umkehrberstscheibe eine stromaufwärtige und eine stromabwärtige Seite aufweist, und wobei die Scherverstärkungseinrichtung (22, 23) sich auf der stromabwärtigen Seite der Umkehrberstscheibe befindet.

17. Umkehrberstscheibe nach Anspruch 3, wobei die Scherverstärkungseinrichtung (22, 23) einen Scheibenhalter (27) aufweist.

18. Umkehrberstscheibe nach Anspruch 1, des Weiteren mit einer Gegendruckstützeinrichtung (21, 27), die angrenzend an den gewölbten Scheibenbereich (16) angeordnet ist.

19. Umkehrberstscheibe nach Anspruch 18, wobei die Gegendruckstützeinrichtung (21, 27) sich auf der konkaven Seite der Scheibenwölbung befindet.

20. Umkehrberstscheibe nach Anspruch 18, wobei die Gegendruckstützeinrichtung (21, 27) eine Form aufweist, die der Form des Übergangsbereiches entspricht.

21. Umkehrberstscheibe nach Anspruch 18, wobei die Gegendruckstützeinrichtung (21, 27) einen Teil des gewölbten Scheibenbereiches (16) umgibt.

22. Umkehrberstscheibe nach Anspruch 18, wobei die Gegendruckstützeinrichtung (21, 27) einen Flansch (29) aufweist mit einem Innendurchmesser, der kleiner ist als der durch die Nut (30) bestimmte Durchmesser.

23. Umkehrberstscheibe nach Anspruch 18, wobei die Gegendruckstützeinrichtung einen Einlassring (21) aufweist.

24. Umkehrberstscheibe nach Anspruch 18, wobei die Gegendruckstützeinrichtung einen Scheibenhalter (27) umfasst.

## Revendications

1. Disque de rupture à voilement inverse, comportant :
(a) une région de rebord annulaire plate (12) ;
(b) une région bombée (16) ayant une épaisseur et une configuration de sorte que ladite région bombée s'inverse en cas d'application d'une pression de fluide prédéterminée au côté convexe de celle-ci, et
(c) une région de transition (14) qui relie la région de rebord annulaire plate (12) à la région bombée (16) ;
**caractérisé par** au moins une déformation concave (18) disposée au sommet ou à proximité du sommet de la région bombée du disque.

2. Disque de rupture à voilement inverse selon la revendication 1, comportant en outre une région de transition irrégulière (20) ayant au moins une section plate adjacente à la région de transition (14) et située dans le même plan que la région de rebord annulaire plate (14) du disque.

3. Disque de rupture à voilement inverse selon la revendication 1 ou 2, dans lequel le disque coopère avec un moyen d'augmentation de l'effet de cisaillement (22, 23).

4. Disque de rupture à voilement inverse selon la revendication 2, comportant en outre une pluralité de régions de transition (20) écartées de façon irrégulière l'une de l'autre.

5. Disque de rupture à voilement inverse selon la revendication 1, dans lequel une rainure (30) ayant une forme en arc est formée le long d'une partie de la région de transition (14) du disque

6. Disque de rupture à voilement inverse selon la revendication 5, dans lequel la profondeur de la rainure est au moins 66% de l'épaisseur du disque dans la région de transition (14).

7. Disque de rupture à voilement inverse selon la revendication 3, dans lequel le dispositif d'augmentation de l'effet de cisaillement comporte une protubérance (22).

8. Disque de rupture à voilement inverse selon la revendication 7, dans lequel la protubérance (22) est localisée en vue de coopérer avec la région de transition irrégulière.

9. Disque de rupture à voilement inverse selon la revendication 3, dans lequel le dispositif d'augmentation de l'effet de cisaillement est formé par une entaille (23).

10. Disque de rupture à voilement inverse selon la revendication 5, dans lequel la rainure (30) s'étend sur un arc d'approximativement 330 degrés.

11. Disque de rupture à voilement inverse selon la revendication 9, dans lequel le dispositif d'augmentation de l'effet de cisaillement est formé par une pluralité d'entailles (23).

12. Disque de rupture à voilement inverse selon la revendication 9, dans lequel l'entaille (23) est localisée en vue de coopérer avec la région de transition irrégulière (20).

13. Disque de rupture à voilement inverse selon la revendication 9, comportant en outre une pluralité de régions des transition irrégulière (20) et une pluralité d'entailles (23).

14. Disque de rupture à voilement inverse selon la revendication 9, dans lequel l'entaille (23) est circulaire.

15. Disque de rupture à voilement inverse selon la revendication 3, dans lequel le dispositif d'augmentation de l'effet de cisaillement (22, 23) comporte une bague de sortie (25).

16. Disque de rupture à voilement inverse selon la revendication 3, dans lequel le disque de rupture à voilement inverse a une côté amont et un côté aval, et dans lequel le dispositif d'augmentation de l'effet de cisaillement (22, 23) est localisé sur le côté aval du disque de rupture à voilement inverse.

17. Disque de rupture à voilement inverse selon la revendication 3, dans lequel le dispositif d'augmentation de l'effet de cisaillement (22, 23) comporte un porte-disque (27).

18. Disque de rupture à voilement inverse selon la revendication 1, comportant en outre un moyen de support de contre-pression (21, 27) situé à proximité de la région bombée (16) du disque.

19. Disque de rupture à voilement inverse selon la revendication 18, dans lequel le moyen de support de contre-pression (21, 27) est situé sur le côté convexe de la région bombée du disque.

20. Disque de rupture à voilement inverse selon la revendication 18, dans lequel le moyen de support de contre-pression (21, 27) définit une forme correspondant à la forme de la région de transition.

21. Disque de rupture à voilement inverse selon la revendication 18, dans lequel le moyen de support de contre-pression (21, 27) entoure une partie de la région bombée (16) du disque.

22. Disque de rupture à voilement inverse selon la revendication 18, dans lequel le moyen de support de contre-pression (21, 27) définit un rebord (29) ayant un diamètre interne inférieur au diamètre défini par la rainure (30).

23. Disque de rupture à voilement inverse selon la revendication 18, dans lequel le moyen de support de contre-pression comporte un anneau d'entrée (21).

24. Disque de rupture à voilement inverse selon la revendication 18, dans lequel le moyen de support de contre-pression comporte un moyen de retenue (27) du disque.
